# EUROPÄISCHE PATENTANMELDUNG

(11) **EP 4 623 754 A1**
(43) Veröffentlichungstag der Anmeldung: **01.10.2025**
(21) Anmeldenummer: 25166017.1
(22) Anmeldetag: 25.03.2025
(51) Int. Cl.: A47B 47/02, A47B 47/04, A47B 57/36, A47B 57/40, F16F 15/00, A47B 95/00, F16B 12/10, F16F 15/04

(54) **BEFESTIGUNGSTEIL FÜR EINRICHTUNGSGEGENSTÄNDE UND VERWENDUNG**

(30) Priorität: 27.03.2024 EP 24167078; 26.06.2024 EP 24184759
(71) Anmelder: Grosjean, Christophe, 2560 Nidau (CH)
(72) Erfinder: Grosjean, Christophe, 2560 Nidau (CH)
(74) Vertreter: AMMANN PATENTANWÄLTE AG

(57) **Zusammenfassung**

Für Inneneinrichtungsgegenstände (15), z. B. Küchenschränke oder bodenstehende Küchenmodule, bestehen spezifische Anforderungen, die Übertragung von Körperschall zu verhindern, z.B. um Schallimmissionen über die Gebäudewand zu vermeiden. Die Übertragung von Körperschall wird dadurch gedämpft, dass in einem Befestigungsteil (3) mindestens ein dämpfender Einsatz (25; 41) und gegebenenfalls aussen dämpfende Schichten (17) angebracht werden. Das Befestigungsteil (3) weist mindestens zwei Arten von Löchern auf, nämlich ein Loch (11) für die Befestigungsmittel zum Gebäude hin und ein oder mehrere Löcher (21) zur Befestigung am Einrichtungsgegenstand, wovon mindestens eines der Löcher der ersten und zweiten Art mit einem dämpfenden Einsatz aus einem Elastomer ausgestattet sind, um die Übertragung von Körperschall zwischen einem Befestigungsmittel, wie z.B. einer Schraube, in dem Loch auf das Befestigungsteil zu unterbinden.

## Beschreibung

Die vorliegende Erfindung bezieht sich auf ein Befestigungsteil für das Anbringen eines Einrichtungsgegenstands, wie Küchenschränke oder Stellschränke, an einer Gebäudeoberfläche gemäss Oberbegriff des Anspruchs 1.

Küchenschränke zum Aufhängen, aber auch am Boden aufgestellte Stellschränke, wie bodenständige Küchenmodule, oder andere Möbel, werden oft an Wand, Fussboden oder auch an der Decke mittels Schrauben befestigt oder aus Sicherheitsgründen fixiert. Ein Problem, das dabei auftreten kann, besteht in der Übertragung von Körperschall oder Vibrationen vom oder auf den Schrankkörper. Die Übertragung generell vom Inneneinrichtungsgegenstand auf das Gebäude kann zu Schallimmissionen in anderen Räumen führen. Aus diesem Grund ist vorgeschrieben, dass die Verbindung mit dem Gebäude eine bestimmte Dämpfung der Übertragung von Schwingungen aufweisen muss. Dieser Wert wurde auch kürzlich um 4 dB für die Schweiz verschärft.

Eine gängige Methode zur Dämpfung von Schallübertragungen sind spezielle Dübel. Allerdings sind diese laut Herstellerangaben nur für Betonwände und unter strikter Einhaltung der Montageanweisungen geeignet. In der Praxis erweist sich die korrekte Anbringung jedoch oft als äußerst komplex, da es nicht immer möglich ist, die Anweisungen des Herstellers genau umzusetzen.

Eine Aufgabe der vorliegenden Erfindung besteht darin, ein Befestigungsteil für das Anbringen eines Einrichtungsgegenstandes anzugeben, das die Übertragung von Schall effektiv dämpft und mit verschiedenen Gebäudewandarten einsetzbar ist.

Weitere, bevorzugt ebenfalls zu lösende Aufgaben sind:
- geringere Kosten;
- Erfüllen der Norm SIA 118.

Ein derartiges Befestigungsteil ist im Anspruch 1 angegeben. Die weiteren Ansprüche geben solche Befestigungsteile und Verwendungen davon an.

Demgemäss besteht das Grundprinzip der vorliegenden Erfindung darin, dass das Befestigungsteil - üblicherweise eine Schraube - mit dem der Inneneinrichtungsgegenstand am Gebäude, zum Beispiel einer Wand, befestigt ist, nicht direkt am Inneneinrichtungsgegenstand angreift, sondern ein Befestigungsteil dazwischen angeordnet ist. Insbesondere bei Möbelstücken mit Wänden geringer Stabilität sind solche Zwischenteile an sich bekannt. Sie werden ihrerseits wieder mit Befestigungsmitteln, z. B. Schrauben, am Einrichtungsgegenstand befestigt. Gemäss der Erfindung können entweder das mindestens eine Loch für die Befestigungsmittel zum Gebäude hin und/oder die Vorkehrungen (mindestens ein Loch, Auflageflächen) zur Anbringung am Einrichtungsgegenstand mit einem elastischen Material ausgestattet, um in die Übertragungskette vom Inneneinrichtungsgegenstand über das Befestigungsteil und das Befestigungsmittel in die Gebäudewand (und umgekehrt) eine Dämpfung einzufügen.

In einer Ausführungsform ist ein blockförmiges Befestigungsteil vorgesehen, bei welchem das gummielastische Material das mindestens eine Loch der ersten oder zweiten Art so auskleidet, dass es an der das Loch definierenden Fläche anliegt. Das Material kann einen Kragen zur Aufnahme eines Kopfes eines Verbindungsmittels, insbesondere einer Schraube, aufweisen und/oder es kann mindestens eine Führungshülse vorgesehen sein, durch welche das Verbindungsmittel hindurchführbar ist und welche in das ausgekleidete Loch eingefügt oder einfügbar ist. Im montierten Zustand liegt der Kopf des Verbindungsmittels an der Führungshülse an.

In einer anderen Ausführungsform ist das Befestigungsteil scheibenförmig mit einem zentralen Loch der ersten oder zweiten Art ausgebildet. Das gummielastische Material kleidet das zentrale Loch so aus, dass es an der das Loch definierenden Fläche anliegt. Um das zentrale Loch der ersten oder zweiten Art herum sind mehrere Löcher der anderen Art angeordnet, wobei vorzugsweise deren jeweiliger Verlauf unter einem Winkel zum Verlauf des zentralen Lochs angeordnet ist.

Im Folgenden gilt, dass dann, wenn "Löcher" erwähnt werden, ein oder mehrere Löcher umfasst sind. Ein "Satz von Löchern" ist daher ein Satz, der mindestens ein Loch umfasst.

Die Erfindung wird weiter anhand von Ausführungsbeispielen unter Bezugnahme auf Figuren erläutert. Es zeigen:
- Fig. 1: modellhaften Ausschnitt aus einer Anordnung von Einrichtungsgegenständen mit 2 Beispielen eines erfindungsgemässen Befestigungsteils;
- Fig. 2: vergrösserte Darstellung eines ersten Befestigungsteiles;
- Fig. 3: Draufsicht auf das erste Befestigungsteil;
- Fig. 4: Seitenansicht auf das erste Befestigungsteil;
- Fig. 5: Draufsicht auf ein zweites Befestigungsteil;
- Fig. 6: Schnitt gemäss V in Fig. 5;
- Fig. 7: eine Variante des ersten Ausführungsbeispiels gemäss Fig. 2 in einer Explosionsansicht;
- Fig. 8: die Darstellung gemäss Fig. 7 aus einem anderen Blickwinkel;
- Fig. 9: eine Seitenansicht der Variante gemäss Fig 7 im zusammengesetzten Zustand;
- Fig. 10: den Grundriss der Variante gemäss Fig 9;
- Fig. 11: die Variante gemäss Fig 9 von der Rückseite;
- Fig. 12: die Variante gemäss Fig 9 von der Vorderseite;
- Fig. 13: die Variante gemäss Fig 9 zusammen mit den Befestigungsmitteln in einer perspektivischen Ansicht; und
- Fig. 14: die Variante gemäss Fig 9 zusammen mit einem Abdeckelement in einer perspektivischen Ansicht.

In den Figuren sind im Inneren liegende Details mit gestrichelten Linien dargestellt.

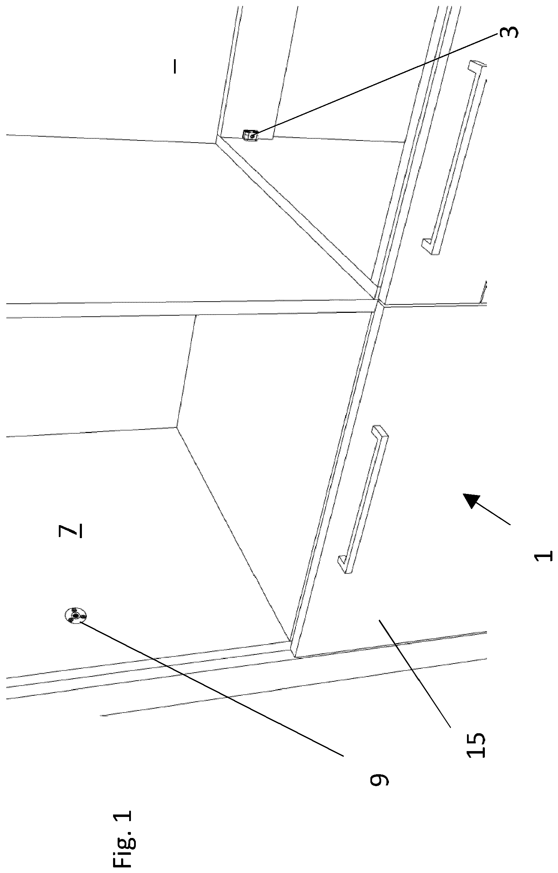

Fig. 1 zeigt eine willkürliche Anordnung 1 von Einrichtungsgegenständen, konkret links einen Hochschrank und rechts ein Küchenunterbaumöbel. Einrichtungsgegenstände können Küchenschränke, Küchenunterbauten zum Aufstellen (Hochschränke) und andere Schränke und Möbelstücke sein, insbesondere zum Befestigen an einer Wand oder Aufstellen an einer Wand. In einer Rückwand eines Einrichtungsgegenstands ist ein erstes Befestigungsteil 3 dargestellt, mit dem ein Schrank an einer Wand 5 angebracht ist. In der Seitenwand 7 ist ein zweites Befestigungsteil 9 zu sehen.

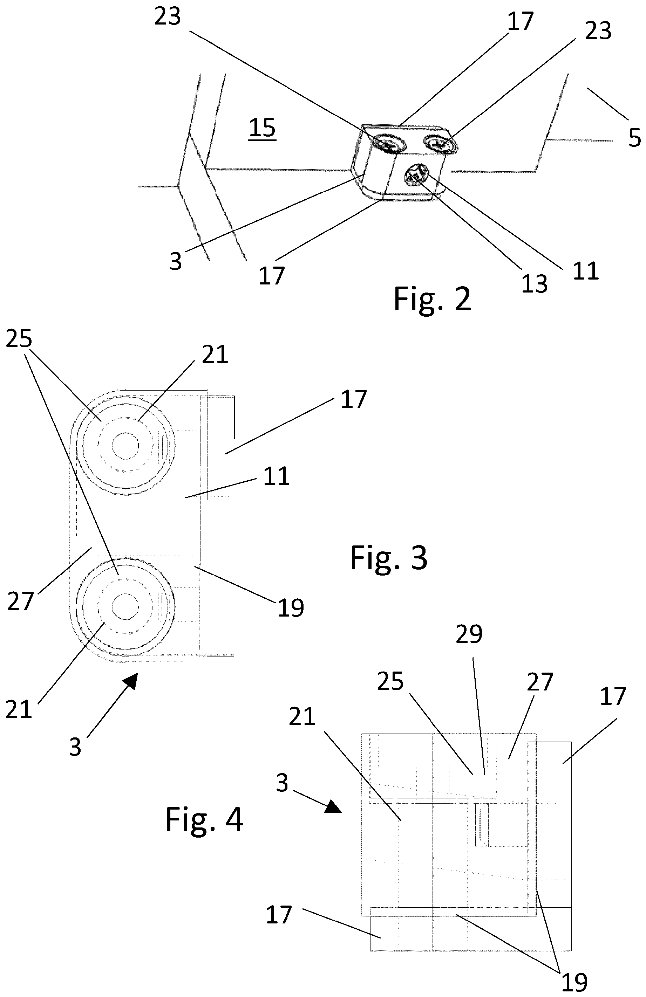

Das Befestigungsteil 3 weist ein erstes, hier (Fig. 2) horizontal verlaufendes Loch 11 auf. Darin ist eine Schraube 13 angebracht, die auf geeignete Art in der Wand 5 dahinter befestigt ist. In die Wand 5 eingeleiteter Körperschall wird über die Schraube 13 auf den harten, starren Körper des Befestigungsteils 3 übertragen. Die Übertragung von Körperschall zwischen Befestigungsteil 3 und Einrichtungsgegenstand 15 wird jedoch durch Dämpfungsvorkehrungen im Befestigungsteil 3 effektiv reduziert. Diese Dämpfungsvorkehrungen beugen gleichermassen einer Übertragung von Körperschall vom Objekt 15 auf den Körper des Befestigungsteils 3 und damit einer Einleitung via Schraube 13 in die Wand 5 vor.

Eine erste Massnahme ist eine Auflage 17 aus einem elastomeren oder gummielastischen Material, die die Übertragung von Schall über die Auflagefläche 19 (s. Fig. 3) des Befestigungsteils 3 auf den Einrichtungsgegenstand 15 oder vom Einrichtungsgegenstand 15 auf das Befestigungsteil 3 verhindert.

Die zweite Massnahme besteht darin, dass die Löcher 21 (s. Fig. 3) für die Schrauben 23, mit denen das Befestigungsteil 3 am Einrichtungsgegenstand 15 befestigt wird, mit einem Einsatz 25 aus elastomerem Material versehen sind. Der Einsatz 25 ist dabei derart gestaltet, dass kein direkter Kontakt der Schrauben 23 mit dem Körper 27 des Befestigungsteils 3 auftritt, der aus einem steifen oder harten Material besteht. Insbesondere erstreckt sich die Auskleidung mit elastomerem Material 25 über die gesamte Länge der Löcher 21 für die Schrauben 23 (s. Fig. 4) und ist am inneren Ende zu einem Kragen 29 erweitert, so dass der Schraubenkopf nur mit elastischem Material in Berührung kommt. Eine kragenartige Ausbildung ist auch geeignet, den Andruck der Schraube beim Anziehen besser zu übertragen.

Insgesamt können zwar Schwingungen, Vibrationen oder Schall zwischen der Wand 5 und dem Körper 27 des Befestigungsteils 3 über eine Schraube 13 übertragen werden. Die Übertragung zum Einrichtungsgegenstand 15 her wird jedoch durch die elastomeren Einsätze 25 beziehungsweise die Elastomer-Auflagen oder -Zwischenlagen 17 wirkungsvoll gedämpft. Gleichermassen wird die Übertragung in umgekehrter Richtung verhindert bzw. wesentlich verringert.

Die Auflagen oder Zwischenlagen 17 können auf beliebige, an sich bekannte Art mit dem Körper 27 verbunden sein, zum Beispiel aufgeklebt oder über Erhebungen und Vertiefungen im Körper aneinander mechanisch angebracht sein. Möglich ist auch eine integrale Ausbildung, indem in einem zweistufigen Herstellungsprozess Körper und Auflagen aneinander ausgebildet werden. Denkbar ist auch, die Auflagen 17 am Einrichtungsgegenstand anzuordnen, den Befestigungskörper 27 darauf zunächst aufzulegen und dann durch die Schrauben 13 und 23 die Auflagen 17 zwischen Körper 27 und dem Einrichtungsgegenstand 15 zu fixieren.

Der Elastomer-Einsatz 25 kann in den Löchern 21 auf verschiedene Art angebracht werden. Am einfachsten ist Einstecken von Elastomer-Körpern mit oder ohne zusätzliche Fixierungsmassnahmen wie etwa Kleben oder auch mechanische Verbindungen durch Erhöhungen und Vertiefungen ähnlich zum Beispiel Schwalbenschwanz Führungen. Denkbar ist auch eine integrale Ausbildung während des Herstellens des Körpers 27 des Befestigungsteils 3 analog der Herstellung der Auflage 17 wie oben schon erwähnt.

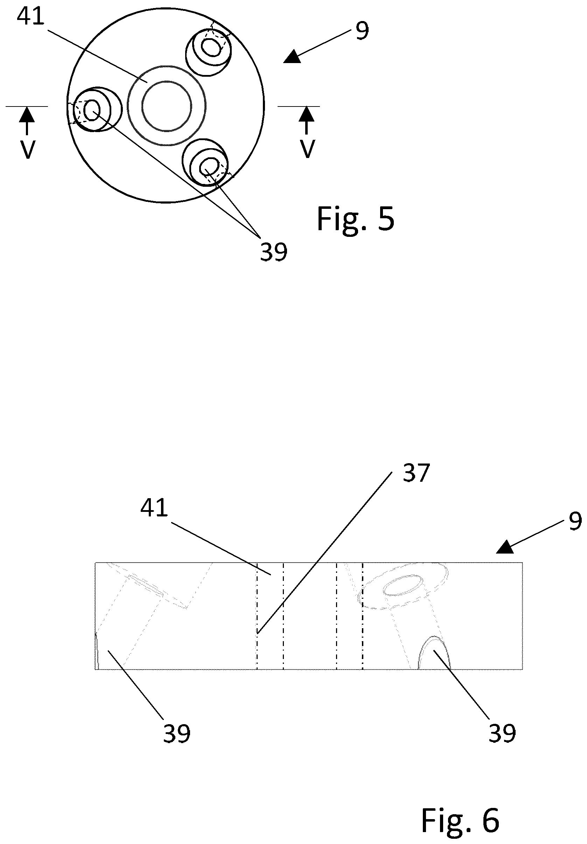

In Figuren 5 und 6 wird eine zweite Ausführungsform eines Befestigungsteils 9 dargestellt. Die Grundform ist eine Scheibe, in der ein zentrales Loch 37 für eine Befestigungsschraube 13 vorgesehen ist. Die Schraube 13 ist dabei ausgeführt, um in einer Wand 5 befestigt zu werden. Um das Loch 37 herum sind drei weitere, kleinere Löcher 39 für Befestigungsschrauben zum Einrichtungsgegenstand 15 hin vorgesehen, die schräg nach aussen zur Peripherie des Befestigungsteils 9 verlaufend ausgebildet sind. Bei dieser Variante befindet sich das elastische, Schall-isolierende Teil 41 in Form eines Einsatzes aus elastomerem Material in der Bohrung 37. Hier wird also schon die Übertragung von Schall zwischen der Wandbefestigungs-Schraube 13 und dem Befestigungsteil 9 unterdrückt. Dieses Befestigungsteil 9 ist daher besonders dafür geeignet, in einem versenkt in einer Wand oder Bodenfläche eines Einrichtungsgegenstandes ausgebildetes Loch angeordnet zu werden.

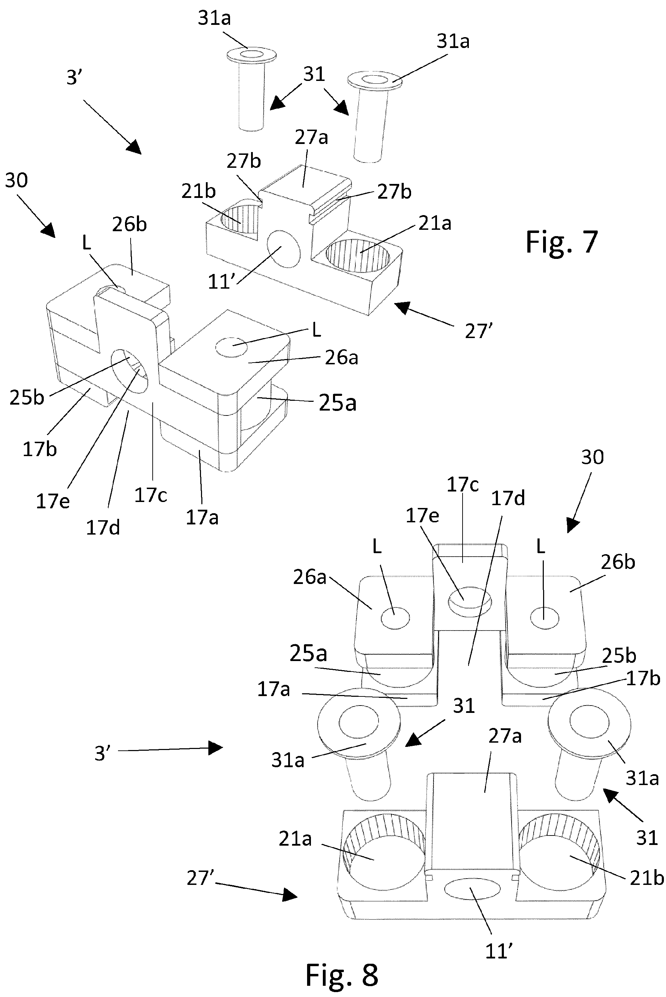

In den Fig. 7 - 15 ist eine Variante des ersten Ausführungsbeispiels gemäss Fig. 2 dargestellt.

Wie insbesondere Fig. 7 und 8 zeigen, umfasst das Befestigungsteil 3' ein Körperelement 27', welches aus den gleichen Materialien wie der Körper 27 des ersten Ausführungsbeispiels gemäss Fig. 2 gefertigt sein kann, eine Dämpfungskomponente 30, welche aus den gleichen Materialien wie die entsprechenden Dämpfungsmittel des ersten Ausführungsbeispiels (Auf- bzw. Zwischenlage 17 und Einsatz 25) gefertigt sein kann, sowie Führungshülsen 31.

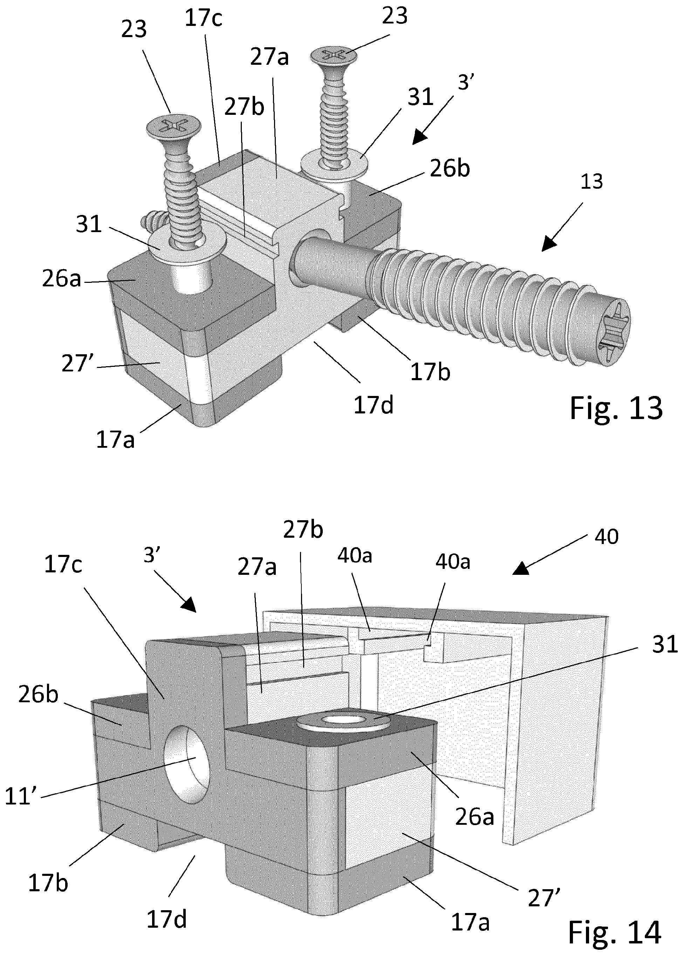

Das Körperelement 27' ist T-förmig ausgebildet und weist einen Mittelteil 27a auf, welches mit einem Loch 11' zum Durchführen einer Wandbefestigungsschraube 13 versehen ist (vgl. Fig. 13) und welches zwischen einem ersten Seitenteil mit Loch 21a und einem zweiten Seitenteil mit Loch 21b angeordnet ist. Durch das jeweilige Loch 21a, 21b ist eine Schraube 23 hindurchführbar (vgl. Fig. 13) zur Verbindung mit dem Einrichtungsgegenstand.

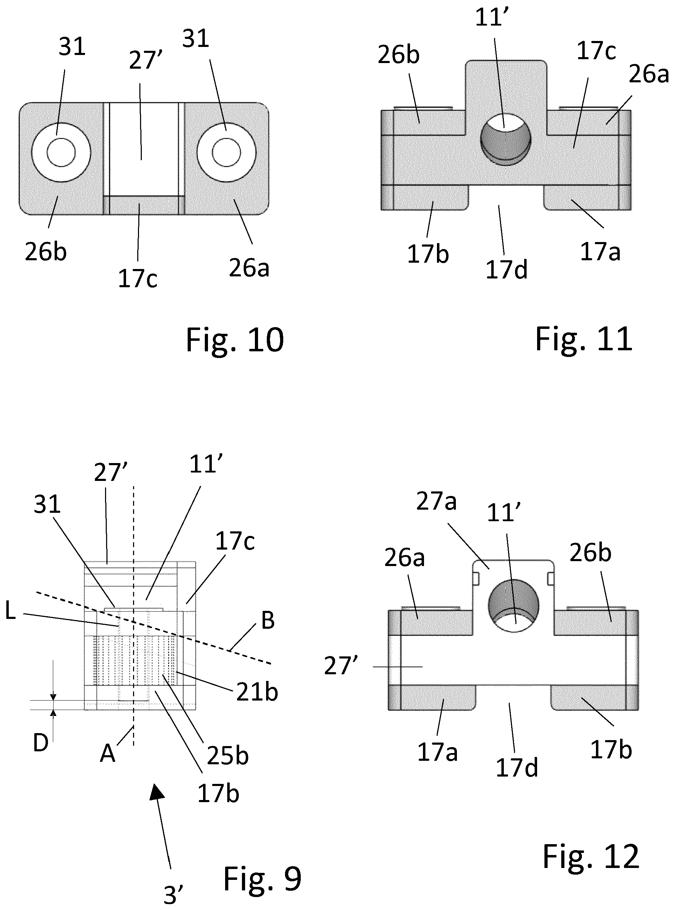

Die Achsen A, in welcher die Löcher 21a, 21b verlaufen, sind parallel zueinander und quer zur Achse B angeordnet, in welcher das Loch 11' verläuft, vgl. Fig. 9. Bei dem vorliegenden Ausführungsbeispiel sind die Achsen A und B nicht rechtwinklig zueinander angeordnet, sondern weichen von 90 Grad um einen Winkel ab, der z.B. mehr als 1 Grad, bevorzugt mindestens 5 Grad, sein kann und der vorzugsweise kleiner als 45 Grad ist.

Der Durchmesser des jeweiligen Lochs 21a, 21b ist wesentlich grösser als der Durchmesser der Schraube 23 gewählt, so dass genügend Raum für die Aufnahme von gummielastischem Material gegeben ist in Form eines Einsatzes 25a, 25b (vgl. nachfolgende Erläuterung). Der Durchmesser kann z.B. mindestens 1.5-fache, bevorzugt 2-fache des Durchmessers der Schraube 23 sein.

Der Mittelteil 27a des Körperelements 27' ist beidseitig mit einer Nut 27b versehen zum Eingriff eines komplementär ausgebildeten Stegs 40a an einem Abdeckelement 40 (vgl. Fig. 14).

Die Dämpfungskomponente 30 umfasst eine erste Anlage 17a und 17b und eine zweite Anlage 17c, die quer dazu angeordnet ist. Die Anlagen 17a, 17b, 17c übernehmen hier die Funktion der Auf- bzw. Zwischenlage 17 des ersten Ausführungsbeispiels gemäss Fig. 2. Im Unterschied zu diesem Beispiel ist die Seite des Körperelements 27', durch welche nach der Befestigung die Schrauben 23 hindurchragen, nicht vollflächig mit dem Dämpfungsmaterial versehen, sondern die erste Anlage 17a, 17b weist mindestens einen Freiraum 17d auf, vgl. auch Fig. 11 und 12. Es hat sich gezeigt, dass durch diese nicht vollflächige Ausgestaltung eine besonders wirksame Dämpfung erzielt werden kann

Die zweite Anlage 17c ist mit einem Loch 17e versehen, welches mit dem Ausgang des Lochs 11' im Körperelement 27' fluchtet.

Die Dämpfungskomponente 30 umfasst weiter einen Einsatz 25a und einen Einsatz 25b zur Auskleidung des Loches 21a bzw. 21b auf, vorzugsweise über jeweils seine gesamte Länge, sowie eine Hülsenauflage 26a, 26b für die Führungshülsen 31. Die Hülsenauflage 26a, 26b umfasst zwei Teile, die gegenüberliegend zur ersten Anlage 17a, 17b und quer zur zweiten Anlage 17c angeordnet sind.

Die jeweilige Führungshülse 31 ist hier zylinderförmig ausgebildet und an dem einen Ende mit einer Auflagescheibe 31a versehen, welche im montierten Zustand auf der Hülsenauflage 26a bzw. 26b aufliegt. Sie ist aus einem steifen Material, z.B. einem geeigneten Kunststoff oder Metall, gefertigt.

Ein Loch L führt durch die jeweilige erste Anlage 17a, 17b, den jeweiligen Einsatz 25a, 25b und die jeweilige Hülsenauflage 26a, 26b, das etwas grösser als der Aussendurchmesser der Führungshülse 31 ist, so dass diese hineingeschoben werden kann (vgl. Fig. 9).

Die Länge der jeweiligen Führungshülse 31 ist so gewählt, dass wenn die sie auf der Hülsenauflage 26a bzw. 26b aufliegt, nicht bis zum Ende des Loches L in der ersten Anlage 17a, 17b reicht. Es ist somit ein Abstand D vorgesehen zwischen dem Ende der jeweiligen Führungshülse 31 und der Unterseite der ersten Anlage 17a, 17b, vgl. Fig. 9. Der Abstand D kann z.B. mindestens 0.2 mm, bevorzugt mindestens 0.5 mm, z.B. 1 mm, betragen. Bei der Montage kommen die Schrauben 23 auf der Auflagescheibe 31a zu liegen und beim Anziehen werden die Teile 17a, 17b, 25a, 25b, 26a, 26b der Dämpfungskomponente 30 etwas zusammengepresst. Der Abstand D ist so auf die Elastizitätseigenschaften der Dämpfungskomponente 30 abgestimmt, dass die Schrauben 23 genügend angezogen werden können, so dass die geforderte Verbindung mit dem Einrichtungsgegenstand gegeben ist, jedoch dieser nicht vom Ende der Führungshülse 31 berührt wird. Es ist somit gewährleistet, dass sich zwischen dem Einrichtungsgegenstand und Körperelement 27' gummielastisches Material befindet und somit Vibrationen wirksam gedämpft werden.

Die Dämpfungskomponente 30 kann aus mehreren Teilen, die bei Bedarf auch unterschiedliche gummielastische Eigenschaften aufweisen können, gefertigt sein, wobei die Teile vorgängig oder bei der Montage zusammengefügt werden. Es ist auch denkbar in einem oder mehreren Schritten die Dämpfungskomponente 30 oder Teile davon am Körperelement 27' integral anzuformen, z.B. durch Spritzgiessen.

Fig. 10-12 zeigen das Befestigungsteil 3' im zusammengesetzten Zustand. Dieses ist blockartig ausgebildet. Wie oben erläutert ist ein Freiraum 17d in der ersten Anlage 17a, 17b vorgesehen.

Fig. 13 zeigt das Befestigungsteil 3' zusammen mit den Schrauben 23, welche hier einen üblichen Schraubenkopf aufweisen, und der Wandbefestigungsschraube 13. Diese ist hier endseitig nicht aufgeweitet. Bei der Montage schneidet das Gewinde der Wandbefestigungsschraube 13 im Loch 11' des Körperelements 27' ein, so dass sich eine Verbindung dazwischen ergibt.

Fig. 14 zeigt das Befestigungsteil 3' zusammen mit dem Abdeckelement 40, welches auf vier Seiten geschlossen ist und mit welchem das Befestigungsteil 3' nach der Montage abgedeckt werden kann, indem der jeweilige Steg 40a in die entsprechende Nut 27b am Befestigungsteil 3' eingefügt wird.

### Test der Wirksamkeit der Übertragungsdämpfungsmittel

Der Test wurde auf einer fix montierten Küchenzeile mit Granit-Arbeitsplatte durchgeführt. Die Messung wurde im Raum direkt hinter der Küchenzeile mit geschlossener Türe gemacht. Auf die Granitplatte wurde eine 16 mm dicke Spanplatte gelegt. Auf die Spanplatte wurde mit einem herkömmlichen Schreinerhammer geschlagen. Damit wurde das Klopfen von Fleisch in einer Küche simuliert.

### Test 1: ohne Schallschutzmittel

Es wurde mit dem Hammer aus einer Höhe von 300 mm auf die 16-mm-Spanplatte geschlagen. Der gemessene Wert im Raum gegenüber war 95,3 dB.

### Test 2: mit Schallschutzmittel:

Es wurde wiederum mit dem Hammer aus einer Höhe von 300 mm auf die 16 mm-Spanplatte eingeschlagen. Auf die Platte wurde noch ein Schallschutzgummi gelegt. Der gemessene Wert im Raum gegenüber war 81,1 dB, also 14,2 dB niedriger.

### Testergebnis:

Das Schallschutzmittel (Gummi) zeigt in diesem Test eine klare Reduktion der Schallübertragung von 14.2 dB.

### Test 3: Mit praxisgemässer Anbringung

In einem Experiment wurde eine Küche einmal ohne Schallschutz an einer Gipskartonwand mit einer 19 mm dicken Spanplatte als Küchenabdeckung befestigt. Mit einem Hammer wurde aus einer Höhe von etwa 30 cm auf die Spanplatte eingeschlagen. Unter diesen Bedingungen wurde in der gegenüberliegenden Wohnung ein Schallpegel von 66 dB gemessen. Bei einer identischen Messung mit Schallschutz gemäss vorliegender Erfindung wurde ein Wert von nur 57 dB gemessen. Das entspricht einer Reduktion um 9 dB im Vergleich zur Situation ohne Schallschutz.

Es ist zu beachten, dass die Testbedingungen nicht optimal waren, da es viele Nebengeräusche gab und keine eingebauten Türen vorhanden waren. Daher gehen wir davon aus, dass der Unterschied unter optimalen Bedingungen noch grösser ausfallen würde.

Aus der vorangehenden Beschreibung von Ausführungsbeispielen sind dem Fachmann Abwandlungen und Ergänzungen der Erfindung zugänglich, ohne den Schutzbereich der Erfindung zu verlassen, der durch die Ansprüche gegeben ist. Denkbar ist unter anderem:
- Als Material für die elastischen, dämpfenden Teile kommen an sich bekannte Materialien in Frage, bevorzugt Elastomere wie Silikone, künstlicher Gummi und Naturgummi. Bewährt haben sich Elastomere, die nicht schmelzbar sind. Denkbar sind aber auch thermoplastische Elastomere, die geschmolzen werden können (thermoplastisches Elastomer). Es wird davon ausgegangen, dass thermoplastische Elastomere insbesondere bevorzugt sind, wenn die Befestigungsteile durch Spritzgiessen hergestellt werden.
- Der Körper 27 bzw. das Körperelement 27' des Befestigungsteils 3, 3', 9 besteht aus einem Kunststoff oder einem anderen belastbaren Material, wie einem metallischen Werkstoff, einem Werkstoff auf Holzbasis, oder Mischformen dieser Materialien, und ist unter Betriebsbedingungen formstabil.
- Die Dämpfung von Körperschall beträgt mindestens 3dB, bevorzugt mindestens 6 dB, weiter bevorzugt mindestens 10 dB, und noch weiter bevorzugt mindestens 13 dB.
- Die Dämpfung wirkt mindestens auf Frequenzen von 1 kHz bis 5 kHz, bevorzugt 1 kHz bis 8 kHz, weiter bevorzugt 1 kHz bis 10 kHz.
- Mehrere Löcher in den Befestigungsteilen für Befestigungsmittel (z. B. Schrauben) zur Wand hin sind vorhanden.
- Statt zylindrischer Löcher sowohl für die Aufnahme der elastischen, dämpfenden Teile als auch der Schrauben sind andere Lochformen möglich, wie eckig (besonders für die Aufnahme der elastischen Teile), Langlöcher, oder unvollständige Löcher, insbesondere speziell für das seitliche Einschieben unter einen Schraubenkopf.
- Eine andere Anzahl von Löchern für die Schrauben 23 zur Befestigung an einem Einrichtungsgegenstand wie 1, 2, 3, 4, 5 oder mehr Löcher.

## Patentansprüche

1. Befestigungsteil (3, 3', 9) für das Anbringen eines Einrichtungsgegenstands (15), insbesondere eines Küchen- oder Stellschranks, an einer Gebäudeoberfläche, wobei das Befestigungsteil ausgebildet ist, um innen im Einrichtungsgegenstand angeordnet zu sein, **dadurch gekennzeichnet, dass** das Befestigungsteil mindestens ein Loch einer ersten Art (21, 21a, 21b, 39) und mindestens ein Loch einer zweiten Art (11, 11', 37) aufweist, wobei mindestens eines der Löcher der ersten und zweiten Art mit einem gummielastischen Material (25; 25a, 25b; 41) ausgekleidet ist, sodass Vibrationen, insbesondere Körperschall, zwischen einem stabförmigen, durch das ausgekleidete Loch gesteckten Verbindungsmittel, insbesondere einer Schraube (23), und dem Befestigungsteil wirksam gedämpft werden.

2. Befestigungsteil (3, 3', 9) gemäss Anspruch 1, **dadurch gekennzeichnet, dass** das gummielastische Material ein nicht schmelzbares Elastomer ist, bevorzugt ein Silikon, ein Naturgummi oder ein Kunstgummi oder ein schmelzbares Elastomer, vorzugsweise ein thermoplastisches Elastomer.

3. Befestigungsteil (3, 3', 9) gemäss einem der Ansprüche 1 bis 2, **dadurch gekennzeichnet, dass** an Aussenflächen des Befestigungsteils, die zur Anlage an einer Oberfläche des Inneneinrichtungsgegenstands (15) vorgesehen sind, eine gegen Vibrationsübertragung wirksame Lage (17, 17a-17c) eines gummielastischen Materials angeordnet ist, vorzugsweise sind als Lage eine erste Anlage (17a, 17b) und eine quer dazu angeordnete zweite Anlage (17c) vorgesehen.

4. Befestigungsteil (3, 3', 9) gemäss einem der Ansprüche 1 bis 3, **dadurch gekennzeichnet, dass** das gummielastische Material, welches das Loch der ersten (21, 21a, 21b, 39) oder zweiten Art (11, 11', 37) auskleidet, eine Dicke von mindestens 1 mm, bevorzugt mindestens 1,5 mm, weiter bevorzugt mindestens 2 mm, und/oder höchstens eine Dicke von 5 mm aufweist, sowie bevorzugt sich über die gesamte Länge des Loches erstreckt,.

5. Befestigungsteil (3, 3', 9) gemäss einem der Ansprüche 1 bis 4, **dadurch gekennzeichnet, dass** die Vibrationen um mindestens 3 dB, bevorzugt mindestens 6 dB, weiter bevorzugt mindestens 10 dB, und noch weiter bevorzugt um mindestens 13 dB, gedämpft werden.

6. Befestigungsteil (3, 3', 9) gemäss einem der Ansprüche 1 bis 5, **dadurch gekennzeichnet, dass** die Vibrationen mindestens im Bereich 1 kHz bis 5 kHz, bevorzugt 1 kHz bis 8 kHz, weiter bevorzugt mindestens im Bereich 1 kHz bis 10 kHz, gedämpft werden.

7. Befestigungsteil (3, 3', 9) gemäss einem der vorangehenden Ansprüche, **dadurch gekennzeichnet, dass** das gummielastische Material (25; 25a, 25b, 41) das Loch der ersten (21, 21a, 21b, 39) oder zweiten Art (11, 11', 37) so auskleidet, dass es an der das Loch definierenden Fläche anliegt.

8. Befestigungsteil (3, 3', 9) gemäss einem der vorangehenden Ansprüche, **dadurch gekennzeichnet, dass** das gummielastische Material (25; 25a, 25b; 41), welches das Loch der ersten (21, 21a, 21b, 39) oder zweiten Art (11, 11', 37) auskleidet, mit weiterem gummielastischem Material (26a, 26b) verbunden ist, an welches ein Kopf des Verbindungsmittels (23), vorzugsweise über ein Zwischenelement (31a), andrückbar ist, und/oder einen Kragen (29) zur Aufnahme des Kopfes des Verbindungsmittels (23) aufweist.

9. Befestigungsteil (3, 3', 9) gemäss einem der vorangehenden Ansprüche, **dadurch gekennzeichnet, dass** es mindestens eine Führungshülse (31) aufweist, durch welche das Verbindungsmittel (23) hindurchführbar ist, und welche in das ausgekleidete Loch (21a, 21b) der ersten oder zweiten Art eingefügt oder einfügbar ist, vorzugsweise weist die mindestens eine Führungshülse eine Auflagescheibe (31a) auf, welche im montierten Zustand auf gummielastischem Material (26a, 26b) aufliegt und/oder vorzugsweise ist die mindestens eine Führungshülse aus steifem Material gefertigt.

10. Befestigungsteil (3, 3', 9) gemäss einem der vorangehenden Ansprüche, **dadurch gekennzeichnet, dass** es an der Seite (17a, 17b), aus welcher das Verbindungsmittel (23) nach der Montage herausragt, mit gummielastischem Material versehen ist, welches vorzugsweise nicht vollflächig angebracht ist zur Bildung eines Freiraums (17d), besonders bevorzugt in zwei Segmenten mit dem Freiraum dazwischen.

11. Befestigungsteil (3, 3', 9) gemäss einem der vorangehenden Ansprüche, **dadurch gekennzeichnet, dass** es mindestens eines der folgenden Merkmale M1-M6 aufweist:
M1) das mindestens eine Loch der ersten Art (21, 21a, 21b) verläuft quer zum mindestens einen Loch der zweiten Art (11, 11');
M2) der Winkel zwischen der Achse (A), in welcher das mindestens eine Loch der ersten Art verläuft, und der Achse (B), in welcher das mindestens eine Loch der zweiten Art verläuft, beträgt 90 Grad oder weicht von 90 Grad um einen Winkel ab, der vorzugsweise mindestens 1 Grad beträgt und/oder höchstens 45 Grad;
M3) das mindestens eine Loch der ersten Art dient zur Verbindung mit dem Einrichtungsgegenstand mittels einer Schraube (23);
M4) das mindestens eine Loch der zweiten Art dient zur Befestigung am Gebäude mittels einer Schraube (13);
M5) es sind mindestens zwei Löcher der ersten Art vorgesehen, welche mit dem gummielastischen Material ausgekleidet sind;
M6) es ist genau ein Loch der zweiten Art vorgesehen.

12. Befestigungsteil (3, 3', 9) gemäss einem der vorangehenden Ansprüche, **dadurch gekennzeichnet, dass** es ein Körperelement (27, 27') umfasst, welches aus einem steifen Material gefertigt ist und in welchem die Löcher der ersten (21, 21a, 21b, 39) und zweiten Art (11, 11', 37) ausgebildet sind.

13. Befestigungsteil (3, 3', 9) gemäss einem der vorangehenden Ansprüche, welches blockartig ausgebildet ist, vorzugsweise weist es einen Mittelteil (27a) mit Nuten (27b) zur Verbindung mit einem Abdeckelement (40) auf.

14. Verwendung des Befestigungsteils (3, 3', 9) gemäss einem der Ansprüche 1 bis 13, **dadurch gekennzeichnet, dass** es zum Befestigen eines Schranks (15) an einer senkrechten Gebäudeoberfläche, bevorzugt eines Küchenschranks, eingesetzt wird.

15. Verwendung des Befestigungsteils (3, 3', 9) gemäss einem der Ansprüche 1 bis 13, **dadurch gekennzeichnet, dass** es zum Befestigen eines Stellschranks (15), bevorzugt eines Küchenstellschranks, eingesetzt wird, wobei das Befestigungsteil zum Sichern gegen Kippen dient.
